# EUROPEAN PATENT APPLICATION

(11) **EP 4 216 010 A1**
(43) Date of publication of application: **26.07.2023**
(21) Application number: 22152757.5
(22) Date of filing: 21.01.2022
(51) Int. Cl.: G05B 19/418, G03F 7/20

(54) **ASSESSING A PROCESS OF MANUFACTURING COMPONENT CARRIERS BY SIMULATION AND EVALUATION BASED ON INPUT PARAMETERS**

(71) Applicant: AT & S Austria Technologie & Systemtechnik Aktiengesellschaft, 8700 Leoben-Hinterberg (AT)
(72) Inventor: Liebfahrt, Sabine, 8605 Kapfenberg (AT); Platzer, Julia, 8010 Graz (AT); Ebner, Claudia, 8583 Edelschrott (AT)
(74) Representative: Dilg, Haeusler, Schindelmann Patentanwaltsgesellschaft mbH

(57) **Abstract**

A method of assessing a manufacturing process of manufacturing component carriers (100), wherein the method comprises providing a set of input parameters comprising product parameters indicative of a design of the component carriers (100) to be manufactured and process parameters indicative of at least part of the manufacturing process, carrying out a simulation of at least part of the manufacturing process based on the input parameters, and evaluating whether the simulation result indicates compliance of at least part of the manufacturing process and/or of at least part of the component carriers (100) to be manufactured with at least one predefined quality criterion.

## Description

The invention relates to a method of assessing a manufacturing process of manufacturing component carriers, a manufacturing plant, a computer-readable medium, and a program element.

In the context of growing product functionalities of component carriers equipped with one or more electronic components and increasing miniaturization of such electronic components as well as a rising number of electronic components to be mounted on the component carriers such as printed circuit boards, increasingly more powerful array-like components or packages having several electronic components are being employed, which have a plurality of contacts or connections, with ever smaller spacing between these contacts. Removal of heat generated by such electronic components and the component carrier itself during operation becomes an increasing issue. At the same time, component carriers shall be mechanically robust and electrically reliable so as to be operable even under harsh conditions.

It is an object of the invention to enable manufacture of component carriers with high efficiency and high reliability.

In order to achieve the object defined above, a method of assessing a manufacturing process of manufacturing component carriers, a manufacturing plant, a computer-readable medium, and a program element according to the independent claims are provided.

According to an exemplary embodiment of the invention, a method of assessing a manufacturing process of manufacturing component carriers is provided, wherein the method comprises providing a set of input parameters comprising product parameters indicative of a design of the component carriers to be manufactured and process parameters indicative of at least part of the manufacturing process, carrying out a simulation of at least part of the manufacturing process based on the input parameters, and evaluating whether the simulation result indicates compliance of at least part of the manufacturing process and/or of at least part of the component carriers to be manufactured with at least one predefined quality criterion.

According to another exemplary embodiment of the invention, a manufacturing plant for manufacturing component carriers is provided, wherein the manufacturing plant comprises a plurality of manufacturing modules each configured for executing at least part of a manufacturing process of manufacturing component carriers, and an assessment device configured for assessing at least part of the manufacturing process by carrying out a method having the above mentioned features.

According to still another exemplary embodiment of the invention, a program element (for instance a software routine, in source code or in executable code) is provided, which, when being executed by a processor (such as a microprocessor or a CPU), is adapted to control or carry out a method having the above mentioned features.

According to yet another exemplary embodiment of the invention, a computer-readable medium (for instance a CD, a DVD, a USB stick, an SD card, a floppy disk or a hard disk, or any other (in particular also smaller) storage medium) is provided, in which a computer program is stored which, when being executed by a processor (such as a microprocessor or a CPU), is adapted to control or carry out a method having the above mentioned featu res.

Data processing which may be performed according to embodiments of the invention can be realized by a computer program, that is by software, or by using one or more special electronic optimization circuits, that is in hardware, or in hybrid form, that is by means of software components and hardware components.

In the context of the present application, the term "component carrier" may particularly denote any support structure which is capable of accommodating one or more components thereon and/or therein for providing mechanical support and/or electrical connectivity and/or optical connectivity and/or thermal connectivity. In other words, a component carrier may be configured as a mechanical and/or electronic carrier for components. In particular, a component carrier may be one of a printed circuit board, an organic interposer, and an IC (integrated circuit) substrate. A component carrier may also be a hybrid board combining different ones of the above mentioned types of component carriers. In the present application, a distinction is made between, on the one hand, virtual component carriers to be manufactured (shown with reference sign 100 in the figures) and being assessed by simulation and evaluation prior to an actual manufacture and, on the other hand, physical component carriers (shown with reference sign 100' in the figures) being actually manufactured as physical bodies.

In the context of the present application, the term "assessing a manufacturing process of manufacturing component carriers" may particularly denote carrying out an analysis which output a theoretically defined manufacturing process would have or would likely have when executed, under consideration of a set of input parameters, in a manufacturing plant for manufacturing physical component carriers. In particular, such an assessment may be made prior to the actual execution of the manufacturing process in the real world based on boundary conditions concerning process and/or target properties of the component carrier.

In the context of the present application, the term "set of input parameters" may particularly denote a plurality of data items representing an input to the assessment. Such input parameters may comprise quantitative parameters (such as a temperature, a pressure, a physical dimension, etc.) and/or qualitative parameters or manufacturing conditions (for instance the use of a certain plating chemistry, execution of mechanical or laser drilling, etc.). Based on such input parameters the assessment of the manufacturing process may then be done. The set of input parameters may also include information from a processing program. For example, the input parameters may indicate which data file is loaded to a manufacturing program. For instance, an artificial intelligence (AI) module may be provided which may choose between different available machines. The result of such a choice may be used as an input parameter.

In the context of the present application, the term "product parameters indicative of the design of the component carriers to be manufactured" may particularly denote target properties and/or target attributes of a component carrier which shall be manufactured by the assessed manufacturing process. For example, such product parameters may indicate a drill pattern of drill holes to be formed in a component carrier for subsequent plating with a metal such as copper. Product parameters may also include information concerning materials of the component carrier, such as a type of plated metal (for instance copper), used dielectric material (for example prepreg), etc. Also geometric product parameters may be covered, for instance information concerning diameter and/or vertical extension of a drill hole, distances between adjacent drill holes, a drill hole density, etc.

In the context of the present application, the term "process parameters" may particularly denote any parameter adjusted for and/or obtained during the manufacturing process. Examples are a target temperature during lamination of the component carrier, a chemical composition used for plating, operational parameters for controlling a laser beam or a drill bit for forming drill holes, etc.

In the context of the present application, the term "carrying out a simulation of at least part of the manufacturing process based on input parameters" may particularly denote a numerical analysis of which output the manufacturing process delivers when executed using said input parameters. In particular, such a simulation may include a finite element method (FEM) simulation. Additionally or alternatively, the simulation may be carried out using a boundary element method (BEM) analysis, a control volume method (CVM) analysis, and/or a random walk method analysis.

In the context of the present application, the term "evaluating whether simulation results indicate compliance of manufacturing process and/or component carriers to be manufactured with a quality criterion" may particularly denote an analysis whether or not execution of the theoretically defined manufacturing process can be expected to lead to desired results, as indicated by one or more quality criteria. For example, such a quality criterion may be whether or not a component carrier manufactured with the envisaged manufacturing process has a metal distribution (in particular a copper distribution) within an acceptable range of metal densities (which may be, for example, a mass of metal per volume of a laminated layer stack). Another quality criterion may be whether a metallic layer thickness is within a predefined specification or range, in particular whether or not an expected value of copper thickness is achieved according to the simulation. Yet another quality criterion may be whether a surface roughness of plated metal is sufficiently large, or is sufficiently small, or is within a predetermined target range of surface roughness values. Hence, a component carrier with expected, predicted or simulated properties may either fulfill a quality criterion related to spatial metal distribution or homogeneity, or may comprise one or more critical regions of excessive or too small metal content.

In the context of the present application, the term "at least part of the manufacturing process" may particularly denote for example one or several stages executed during carrying out a component carrier manufacturing process. Such stages may for instance be lamination, drilling drill holes, plating drill holes, patterning metal layers, etc. Actually, the term may also cover a further part of the manufacturing process that for example is subsequent to the at least one part of the manufacturing process for that the process parameters have been provided and which has been subject to simulation.

According to an exemplary embodiment of the invention, a component carrier manufacturing process envisaged for realization may be assessed theoretically or numerically on the basis of input parameters. The latter may preferably reflect product parameters characterizing the design of the component carriers which shall be manufactured using the manufacturing process under assessment. Furthermore, process parameters of the input parameters may be considered for the assessment which characterize the manufacturing process partially or entirely. Thus, both target attributes of the component carriers to be produced as well as at least part of a process description or manufacturing recipe may be considered for the analysis of the appropriateness of the manufacturing process under analysis. Using the mentioned input parameters, execution of the manufacturing process may be simulated theoretically. A simulation result may then be analysed for determining whether or not one or more predefined quality criteria are satisfied when executing the manufacturing process using the set of input parameters. By taking this measure, a component carrier manufacturing process may be analysed concerning its appropriateness for achieving compliance with quality criteria on a theoretical level before actually executing it for manufacturing real component carriers. If issues, errors or faults are found on this theoretical level, they can be fixed or cleared at an early level without producing a significant amount of defective component carriers which need to be classified as waste. Advantageously, the combination of simulation and subsequent evaluation may be, for instance when repeated iteratively a number of times with modified input parameters, highly appropriate for classifying the quality of the manufacturing process in a meaningful way. Furthermore, changes of the initially defined manufacturing process may be tried for refining the manufacturing process and its input parameters for achieving or improving compliance with target properties such as quality criteria. After having confirmed the manufacturing process as complying with the quality criteria or after having changed the manufacturing process to achieve compliance, the approved manufacturing process may then be executed in practice or in the real world for producing real or physical component carriers with high yield, high reliability and low waste. This may also reduce the ecological footprint in terms of component carrier manufacture.

Just as an example, it may be possible to simulate a plating process for filling drill holes of a printed circuit board (PCB)-type component carrier for identifying potential critical PCB regions in terms of copper density. Critical may be, for example, a region of the component carrier in which the simulation shows that an actual amount of plated metal obtained according to a simulation of the plating process is significantly below a target amount of plated metal. If such one or more regions are found during the evaluation, parameters such as drill pattern, drill hole size and/or plating time may be modified prior to releasing a corresponding manufacturing process for real execution. An exemplary embodiment of the invention may be embodied as a software tool which calculates the copper deposition depending on the amount of laser vias or plated through holes to predict where failures during a copper plating process might probably happen.

In the following, further exemplary embodiments of the method, the manufacturing plant, the computer-readable medium, and the program element will be explained.

In an embodiment, the method comprises identifying at least one critical region of a component carrier to be manufactured by the manufacturing process and/or at least one critical part of the manufacturing process based on a result of the evaluating. In particular, a critical region of a virtual component carrier to be manufactured may be denoted as a region in which one or more parameter values or properties are outside of an acceptable range. For example, such a critical region may be a region with a too small thickness of plated copper density due to a locally inappropriate plating result in this region. For example, this may lead, if a real component carrier was produced in practice with a corresponding manufacturing process, to reliability issues during operation of the component carrier. For instance, no functioning, no sufficiently low ohmic and/or no sufficiently reliable component carrier can be expected based on the execution of the manufacturing process using the input product parameters and process parameters in such a scenario. However, also a critically high metal amount in or around a through hole, such as too high values of plated metal, may lead to issues such as plugging the through hole (in particular by inclusions). This may lower reliability of the electrical connection, may affect the entire process stage, and may lead to more scrap parts. In an embodiment, a critical region may hence be a region of the component carrier in which, according to the simulation, the metal amount is too high or too low or outside of a predefined range. Also surface roughness of plated metal may be critically high or critically low: If surface roughness is too low, this may lead to delamination when further resin material is applied on a surface. However, if surface roughness is too high, a further surface finish process may be hard to perform if a smooth surface is intended. By ensuring that the surface roughness of plated method is within an acceptable range, scrap parts may be reduced.

In an embodiment, the method comprises changing at least one of said input parameters and repeating the simulation with the changed set of input parameters for enhancing compliance with the at least one predefined quality criterion. If lack of compliance of the simulated and evaluated component carriers with at least one quality criterion is found, one or more input parameters (for instance drill hole density in a critical region, drill hole size and/or parameters of a plating process) may be changed before repeating iteratively the simulation and evaluation processes. By modifying the multi-dimensional parameter space in a trial and error approach, deviations between properties of simulated obtained component carriers and component carriers with target properties may be reduced or even minimized. Hence, execution of an iterative process may allow to improve the manufacturing process of producing component carriers ahead of executing it.

For example, the simulation and/or its repetition may use a combination of at least two different simulation algorithms, in particular at least two different complementary simulation algorithms. For example, it may be helpful to change a respective parameter with different methods to further improve the reliability and quality of the results. For instance, a gradient method, a Monte Carlo method, a Finite Element Method (FEM), etc. may be executed, and the results of said complementary simulation methods may be considered in combination. The gradient method may for example compare a quality before and after changing a parameter. If the quality is enhanced (for instance indicated by the gradient going upwards), an AI module may change the parameters toward the direction of an increase of the quality until it reaches a maximum. However, the gradient method, when used alone, may lead to the phenomenon that the simulation result stays around a local maximum, because changing the variables may lead to a decrease of the quality if the calculation is further proceeded. A Monte Carlo method, however, may set variables randomly and may calculate a result. This method can lead to find a global maximum and best conditions, which the gradient method alone may not be feasible to reach. For example, a local or even global maximum quality may thus be achieved by combining two or more complementary types of simulation methods. What concerns the aforementioned terms, a "gradient method" may be an algorithm to solve problems of minimizing a function with search directions defined by the gradient of the function at the current point. Examples of gradient methods are the gradient descent and the conjugate gradient. A "maximum" may be the upper extreme value in a set or in a range. In particular, a local maximum may be a data point higher than surrounding data points when there may be higher points elsewhere but not nearby. The highest data point at all may be denoted as a global maximum.

In an embodiment, providing the set of input parameters comprises receiving at least one user input, and taking into account the received at least one user input for carrying out the simulation. Thus, also a user may define one or more boundary conditions reflected in product parameters and/or process parameters in order to promote the probability of success or compliance with user requirements concerning PCB manufacture. In other words, enabling a user to influence the assessment of the manufacturing process by considering user-defined boundary conditions may allow the system to quickly find a result complying with both objective quality criteria and subjective needs of a user.

In an embodiment, the at least one user input includes a modification of at least one of the input parameters. Additionally or alternatively, a user may fix at least one of the input parameters as user input. For instance, an experienced user may have expert knowledge concerning acceptable values of certain input parameters for achieving meaningful results. For example, such a user may know that a change of a drill pattern in a certain way may have a positive impact on quality of a plating result. Thus, the user may select appropriate starting points in terms of defining product parameters and/or process parameters. It may also be possible that the user fixes one or more product parameters and/or one or more process parameters excluded from modification in terms of iterative simulation and evaluation. This may prevent the system from changing properties which should be fixed for certain reasons, or prevent the system from changing parameters in an undesired way. A user may also define, via the user input, allowed ranges for a modification of a respective one of the at least one input parameter. This may speed up the simulation and evaluation process and may lead to a meaningful assessment result while preventing the system from analyzing artificial regions.

In an embodiment, the method comprises carrying out the simulation and/or the evaluating using an artificial intelligence (AI) module. For example, the artificial intelligence module may be configured for performing machine learning for assessing the manufacturing process, in particular for carrying out a meaningful simulation and/or evaluation. The term "machine learning" may particularly denote the implementation of algorithms and/or statistical models that a processor (such as a computer system) may use to perform a specific task without using explicit instructions, relying on patterns and inference instead. In particular, machine learning algorithms may build a mathematical model based on sample data (which may also be denoted as training data) in order to make predictions or decisions without being explicitly programmed to perform the task. Machine learning algorithms may be particularly applied in terms of assessing appropriateness of a component carrier manufacturing process, in which typical and repeated defect types or critical patterns or regions of PCBs may be identified. This may enable a rapid learning of an artificial intelligence module. The concept of enabling a human user to accept or overrule a proposal made by an artificial intelligence module in terms of modifying input parameters for improving compliance with one or more predefined quality criteria may provide valuable learning data for the artificial intelligence module.

In an embodiment, the method comprises supplying at least one of the group consisting of a result of the simulation, a result of the evaluating, historic experimental data, historic simulation results, and data relating to the at least one predefined quality criterion for training the artificial intelligence module. Hence, all the mentioned elements of information may provide meaningful data to the artificial intelligence module, for instance for adjusting the weights of its neurons, for improving correctness and appropriateness of future predictions and proposals made by the AI module in terms of assessing the manufacturing process of manufacturing component carriers.

In an embodiment, the method comprises simulating, as the at least part of the manufacturing process, a process of applying metal to the component carriers. Applying metal to a component carrier can be considered as a key stage of a manufacturing process for obtaining (in particular electrically) reliable component carriers. Such an applied metal may have an electric function so that, if the metal application is inappropriate, a proper functioning of the component carrier cannot be ensured. Additionally or alternatively, an applied metal may have a thermal function so that, if the metal application is inappropriate, a required heat removal away from the component carrier (for example away from an active component embedded in the component carrier) cannot be guaranteed. Thus, assessing a manufacturing process by simulation and evaluation of metal application processes may provide highly relevant information about electric and/or thermal reliability of the component carriers which can be expected to be obtained from a corresponding manufacturing process.

In an embodiment, the method comprises simulating, as the process of applying metal to the component carriers, a process of depositing metal. This may include simulation and evaluation of processes such as galvanic plating, electroless plating (in particular sputtering or formation of chemical metal), printing (for instance stencil printing or inkjet printing), chemical vapour deposition (CVD), physical vapour deposition (PVD), 3D printing, and metal printing. In a preferred embodiment, galvanic plating (preferably following electroless plating) of drill holes in the component carriers to be manufactured may be simulated and evaluated. Such a galvanic plating process may provide the vast majority of the copper content into drill holes and may therefore be decisive for the electric and/or thermal reliability of a corresponding component carrier. If the simulation shows that a simulated value of a galvanically plated metal deviates significantly from a target value, there may be issues in terms of electric and/or thermal reliability, and the corresponding region of the component carrier may be classified critical. In such a critical region, a modification of the product and/or process parameters used as a set of input parameters for a changed iteration in terms of simulation and evaluation may be carried out. By taking this measure, one or more regions of the component carrier identified to be potentially critical may be redesigned in advance of its actual production for converting its classification from critical into compliant with at least one predefined quality criterion.

In an embodiment, the method comprises evaluating an expected spatial distribution of the applied metal over the component carrier to be manufactured. By taking this measure, one or more regions with inappropriate metal depletion in comparison with a desired metal content may be reliably identified.

In an embodiment, the method comprises evaluating whether the simulation result indicates compliance of at least part of the manufacturing process and/or of at least part of the component carriers to be manufactured with at least one predefined quality criterion comprises evaluating a deviation between the expected spatial distribution and a predefined target distribution of the applied metal over the component carrier to be manufactured. For instance, if the algorithm determines, as a result of its simulation of a plating process of plating drill holes in a layer stack of the component carrier to be manufactured, that the amount of plated metal in said drill holes deviates from a target amount (which can be one of the input parameters) by more than a predefined threshold value (which can be related to a quality criterion), non-compliance with a plating amount-related quality criterion may be concluded. A corresponding spatial region of the component carrier to be manufactured, in which non-compliance has been identified, may be classified as critical. Such a process is numerically simple and nevertheless very meaningful what concerns the assessment of the manufacturing process for ensuring reliability of manufactured component carriers.

In an embodiment, the method comprises determining at least one region of the component carrier to be manufactured in which the applied metal, as obtained from the simulation, has a critical value. In particular, the critical value may indicate a critically small amount and/or a critically small thickness of metal, for instance in a drill hole. Hence, the simulation and evaluation may be carried out in a spatially dependent way for the component carriers to be manufactured so that compliance or non-compliance of the one or more quality criteria may be determined in a spatially resolved manner. For instance, the system may create a virtual map of the component carrier to be manufactured indicating for each spatial position or spatial region compliance or non-compliance with the respective quality criterion. Consequently, an iterative process of changing one or more input parameters for achieving or improving compliance of the component carrier to be manufactured with the at least one quality criterion may be executed.

In an embodiment, the method comprises simulating a distribution of applied metal in an interior and/or on at least one of main surfaces of the component carriers. Thus, the correct application, in particular deposition, more particularly plating, of metal in drill holes in a laminated stack of a component carrier to be manufactured may be simulated and evaluated in a spatially resolved way along a direction perpendicular to the main surfaces of the component carrier. This may allow to determine information as to whether the metal content inside of the drill holes and/or at a main surface complies with a corresponding quality criterion. For example, deriving such information for an interior of the drill holes may allow to identify the risk of voids. Additionally or alternatively, inappropriate metallic material on the main surfaces of the stack to be used for electric connection with the electrically conductive elements of the component carrier may be identified as well.

In an embodiment, the method comprises creating a visual output displaying at least part of the component carrier to be manufactured as obtained by the simulation and/or by the evaluating. Based on a result of the simulation and/or evaluation, a map of the virtually manufactured component carrier may be displayed for visually showing potential critical regions to a user on a screen. For example, one or more such critical regions may be highlighted on a display for enabling a user to identify corresponding issues prima facie. The user may then understand easily when there is a potential action item for changing input parameters of the manufacturing process to reduce or even eliminate critical regions of the component carrier when being manufactured in accordance with the assessed manufacturing process.

In an embodiment, the method comprises manufacturing a physical component carrier based on a result of the simulation and/or of the evaluating of a corresponding virtual component carrier to be manufactured. Correspondingly, the manufacturing plant may comprise a manufacturing control device configured for controlling the manufacturing modules for manufacturing the component carriers based on a result of the simulation and/or of the evaluating. In particular when the result of the evaluation is that there are no critical regions of the component carrier and/or there is compliance with the at least one quality criterion, actual execution of the manufacturing process for producing physical component carriers may be approved and triggered. Consequently, component carriers may be manufactured with high reliability and yield. Such a manufacture may be environmentally friendly, since the amount of waste can be significantly reduced (by avoiding the manufacture of component carriers failing to comply with the at least one predefined quality criterion).

In an embodiment, examples for input parameters are a drill file indicative of an arrangement of drill holes to be drilled and to be filled with metal, and data specifying a panel to be used for manufacturing the component carriers. Descriptively speaking, a drill file may be a (in particular two-dimensional) map indicating positions and dimensions of drill holes to be formed by drilling (in particular by laser drilling and/or mechanically drilling) of component carriers or a panel comprising an array of still integrally connected component carriers before separation or completion manufacture thereof. For example, a panel may be a planar sheet (for instance having dimensions of 18 inch x 18 inch or 18 inch x 24 inch) used for a batch manufacture of a plurality of component carriers simultaneously. Furthermore, the above-mentioned drill file can be more generally a manufacturing data file which may comprise other and/or further information (i.e., information other than indicative of the arrangement of the drill holes). Furthermore, a drill file or more generally manufacturing data file can be indicative of only a portion of the panel to be used (or component carrier to be manufactured).

In an embodiment, the product parameters comprise Computer-Aided Manufacturing (CAM) data defining the component carriers to be manufactured by a manufacturing plant and/or a corresponding manufacturing process to be executed by the manufacturing plant. In a preferred embodiment, CAM may be implemented in a component carrier manufacturing apparatus as a software-based system to control the manufacturing modules during the manufacturing of component carriers. In such a CAM system, it may be possible to use assistance by a computer in operations of the manufacturing plant, including planning, management, transportation and/or storage. By implementing CAM in component carrier manufacture, it may be possible to create a fast production process, and component carriers may be manufactured with precise dimensions and material consistency.

In an embodiment, the product parameters are indicative of a physical shape of the component carriers to be manufactured, in particular in terms of at least one of the group consisting of holes, external recesses, and an outline. More generally, the product parameters may comprise geometric parameters of the component carriers to be manufactured. Thus, the product parameters may define how the readily manufactured component carriers shall look like.

The component carriers may have a sheet (or plate) like design comprising two opposing main surfaces. The main surfaces may form the two largest surface areas of the component carrier. The main surfaces are connected by circumferential side walls. The thickness of a component carrier is defined by the distance between the two opposing main surfaces. The main surfaces may comprise functional sections, such as conductive traces or conductive interconnections with further elements, such as one or more integrated circuits (ICs).

In an embodiment, the component carriers comprise a stack which comprises at least one electrically insulating layer structure and at least one electrically conductive layer structure. For example, the component carrier may be a laminate of the mentioned electrically insulating layer structure(s) and electrically conductive layer structure(s), in particular formed by applying mechanical pressure and/or thermal energy. The mentioned stack may provide a plate-shaped component carrier capable of providing a large mounting surface for further components and being nevertheless very thin and compact.

In an embodiment, the component carrier is shaped as a plate. This contributes to the compact design, wherein the component carrier nevertheless provides a large basis for mounting components thereon. Furthermore, in particular a naked die as example for an embedded electronic component, can be conveniently embedded, thanks to its small thickness, into a thin plate such as a printed circuit board.

In an embodiment, the component carrier is configured as one of the group consisting of a printed circuit board, a substrate (in particular an IC substrate), and an interposer.

In the context of the present application, the term "printed circuit board" (PCB) may particularly denote a plate-shaped component carrier which is formed by laminating several electrically conductive layer structures with several electrically insulating layer structures, for instance by applying pressure and/or by the supply of thermal energy. As preferred materials for PCB technology, the electrically conductive layer structures are made of copper, whereas the electrically insulating layer structures may comprise resin and/or glass fibers, so-called prepreg or FR4 material. The various electrically conductive layer structures may be connected to one another in a desired way by forming holes through the laminate, for instance by laser drilling or mechanical drilling, and by partially or fully filling them with electrically conductive material (in particular copper), thereby forming vias or any other through-hole connections. The filled hole either connects the whole stack, (through-hole connections extending through several layers or the entire stack), or the filled hole connects at least two electrically conductive layers, called via. Similarly, optical interconnections can be formed through individual layers of the stack in order to receive an electro-optical circuit board (EOCB). Apart from one or more components which may be embedded in a printed circuit board, a printed circuit board is usually configured for accommodating one or more components on one or both opposing surfaces of the plate-shaped printed circuit board. They may be connected to the respective main surface by soldering. A dielectric part of a PCB may be composed of resin with reinforcing fibers (such as glass fibers).

In the context of the present application, the term "substrate" may particularly denote a small component carrier. A substrate may be a, in relation to a PCB, comparably small component carrier onto which one or more components may be mounted and that may act as a connection medium between one or more chip(s) and a further PCB. For instance, a substrate may have substantially the same size as a component (in particular an electronic component) to be mounted thereon (for instance in case of a Chip Scale Package (CSP)). More specifically, a substrate can be understood as a carrier for electrical connections or electrical networks as well as component carrier comparable to a printed circuit board (PCB), however with a considerably higher density of laterally and/or vertically arranged connections. Lateral connections are for example conductive paths, whereas vertical connections may be for example drill holes. These lateral and/or vertical connections are arranged within the substrate and can be used to provide electrical, thermal and/or mechanical connections of housed components or unhoused components (such as bare dies), particularly of IC chips, with a printed circuit board or intermediate printed circuit board. Thus, the term "substrate" also includes "IC substrates". A dielectric part of a substrate may be composed of resin with reinforcing particles (such as reinforcing spheres, in particular glass spheres).

The substrate or interposer may comprise or consist of at least a layer of glass, silicon (Si) and/or a photoimageable or dry-etchable organic material like epoxy-based build-up material (such as epoxy-based build-up film) or polymer compounds (which may or may not include photo- and/or thermosensitive molecules) like polyimide or polybenzoxazole.

In an embodiment, the at least one electrically insulating layer structure comprises at least one of the group consisting of a resin or a polymer, such as epoxy resin, cyanate ester resin, benzocyclobutene resin, bismaleimide-triazine resin, polyphenylene derivate (e.g. based on polyphenylenether, PPE), polyimide (PI), polyamide (PA), liquid crystal polymer (LCP), polytetrafluoroethylene (PTFE) and/or a combination thereof. Reinforcing structures such as webs, fibers, spheres or other kinds of filler particles, for example made of glass (multilayer glass) in order to form a composite, could be used as well. A semi-cured resin in combination with a reinforcing agent, e.g. fibers impregnated with the above-mentioned resins is called prepreg. These prepregs are often named after their properties e.g. FR4 or FR5, which describe their flame retardant properties. Although prepreg particularly FR4 are usually preferred for rigid PCBs, other materials, in particular epoxy-based build-up materials (such as build-up films) or photoimageable dielectric materials, may be used as well. For high frequency applications, high-frequency materials such as polytetrafluoroethylene, liquid crystal polymer and/or cyanate ester resins, may be preferred. Besides these polymers, low temperature cofired ceramics (LTCC) or other low, very low or ultra-low DK materials may be applied in the component carrier as electrically insulating structures.

In an embodiment, the at least one electrically conductive layer structure comprises at least one of the group consisting of copper, aluminum, nickel, silver, gold, palladium, tungsten and magnesium. Although copper is usually preferred, other materials or coated versions thereof are possible as well, in particular coated with supra-conductive material or conductive polymers, such as graphene or poly(3,4-ethylenedioxythiophene) (PEDOT), respectively.

At least one further component may be embedded in and/or surface mounted on the stack. The component and/or the at least one further component can be selected from a group consisting of an electrically non-conductive inlay, an electrically conductive inlay (such as a metal inlay, preferably comprising copper or aluminum), a heat transfer unit (for example a heat pipe), a light guiding element (for example an optical waveguide or a light conductor connection), an electronic component, or combinations thereof. An inlay can be for instance a metal block, with or without an insulating material coating (IMS-inlay), which could be either embedded or surface mounted for the purpose of facilitating heat dissipation. Suitable materials are defined according to their thermal conductivity, which should be at least 2 W/mK. Such materials are often based, but not limited to metals, metal-oxides and/or ceramics as for instance copper, aluminium oxide (Al₂O₃) or aluminum nitride (AIN). In order to increase the heat exchange capacity, other geometries with increased surface area are frequently used as well. Furthermore, a component can be an active electronic component (having at least one p-n-junction implemented), a passive electronic component such as a resistor, an inductance, or capacitor, an electronic chip, a storage device (for instance a DRAM or another data memory), a filter, an integrated circuit (such as field-programmable gate array (FPGA), programmable array logic (PAL), generic array logic (GAL) and complex programmable logic devices (CPLDs)), a signal processing component, a power management component (such as a field-effect transistor (FET), metal-oxide-semiconductor field-effect transistor (MOSFET), complementary metal-oxide-semiconductor (CMOS), junction field-effect transistor (JFET), or insulated-gate field-effect transistor (IGFET), all based on semiconductor materials such as silicon carbide (SiC), gallium arsenide (GaAs), gallium nitride (GaN), gallium oxide (Ga₂O₃), indium gallium arsenide (InGaAs) and/or any other suitable inorganic compound), an optoelectronic interface element, a light emitting diode, a photocoupler, a voltage converter (for example a DC/DC converter or an AC/DC converter), a cryptographic component, a transmitter and/or receiver, an electromechanical transducer, a sensor, an actuator, a microelectromechanical system (MEMS), a microprocessor, a capacitor, a resistor, an inductance, a battery, a switch, a camera, an antenna, a logic chip, and an energy harvesting unit. However, other components may be embedded in the component carrier. For example, a magnetic element can be used as a component. Such a magnetic element may be a permanent magnetic element (such as a ferromagnetic element, an antiferromagnetic element, a multiferroic element or a ferrimagnetic element, for instance a ferrite core) or may be a paramagnetic element. However, the component may also be a IC substrate, an interposer or a further component carrier, for example in a board-in-board configuration. The component may be surface mounted on the component carrier and/or may be embedded in an interior thereof. Moreover, also other components, in particular those which generate and emit electromagnetic radiation and/or are sensitive with regard to electromagnetic radiation propagating from an environment, may be used as component.

In an embodiment, the component carrier is a laminate-type component carrier. In such an embodiment, the component carrier is a compound of multiple layer structures which are stacked and connected together by applying a pressing force and/or heat.

After processing interior layer structures of the component carrier, it is possible to cover (in particular by lamination) one or both opposing main surfaces of the processed layer structures symmetrically or asymmetrically with one or more further electrically insulating layer structures and/or electrically conductive layer structures. In other words, a build-up may be continued until a desired number of layers is obtained.

After having completed formation of a stack of electrically insulating layer structures and electrically conductive layer structures, it is possible to proceed with a surface treatment of the obtained layers structures or component carrier.

In particular, an electrically insulating solder resist may be applied to one or both opposing main surfaces of the layer stack or component carrier in terms of surface treatment. For instance, it is possible to form such a solder resist on an entire main surface and to subsequently pattern the layer of solder resist so as to expose one or more electrically conductive surface portions which shall be used for electrically coupling the component carrier to an electronic periphery. The surface portions of the component carrier remaining covered with solder resist may be efficiently protected against oxidation or corrosion, in particular surface portions containing copper.

It is also possible to apply a surface finish selectively to exposed electrically conductive surface portions of the component carrier in terms of surface treatment. Such a surface finish may be an electrically conductive cover material on exposed electrically conductive layer structures (such as pads, conductive tracks, etc., in particular comprising or consisting of copper) on a surface of a component carrier. If such exposed electrically conductive layer structures are left unprotected, then the exposed electrically conductive component carrier material (in particular copper) might oxidize, making the component carrier less reliable. A surface finish may then be formed for instance as an interface between a surface mounted component and the component carrier. The surface finish has the function to protect the exposed electrically conductive layer structures (in particular copper circuitry) and enable a joining process with one or more components, for instance by soldering. Examples for appropriate materials for a surface finish are Organic Solderability Preservative (OSP), Electroless Nickel Immersion Gold (ENIG), Electroless Nickel Immersion Palladium Immersion Gold (ENIPIG), gold (in particular hard gold), chemical tin, nickel-gold, nickel-palladium, etc.

In an embodiment, the component carrier related body is a laminate-type component carrier. In such an embodiment, the component carrier is a compound of multiple layer structures which are stacked and connected together by applying a pressing force and/or heat.

The aspects defined above and further aspects of the invention are apparent from the examples of embodiment to be described hereinafter and are explained with reference to these examples of embodiment.
Figure 1A illustrates a manufacturing plant comprising a system for assessing a manufacturing process of manufacturing component carriers according to an exemplary embodiment of the invention.
Figure 1B illustrates a flowchart of a method for assessing a manufacturing process of manufacturing component carriers according to an exemplary embodiment of the invention.
Figure 2 illustrates a system for executing a method of assessing a manufacturing process of manufacturing component carriers according to an exemplary embodiment of the invention.
Figure 3 shows a visual output displaying a component carrier simulated by a method according to an exemplary embodiment of the invention.
Figure 4 shows a diagram illustrating results of a simulation and evaluation of a method according to an exemplary embodiment of the invention.
Figure 5 to Figure 9 show arrays of simulated component carriers to be manufactured during a process of improving a design for meeting quality criteria according to an exemplary embodiment of the invention.

The illustrations in the drawings are schematic. In different drawings, similar or identical elements are provided with the same reference signs.

Before referring to the drawings, exemplary embodiments will be described in further detail, some basic considerations will be summarized based on which exemplary embodiments of the invention have been developed.

According to an exemplary embodiment of the invention, a manufacturing process of manufacturing component carriers (such as PCBs) is analysed theoretically before carrying it out. Such an assessment may be made based on input product parameters characterizing properties of the component carriers which shall be manufactured based on input process parameters describing the manufacturing process. On the basis of these input parameters, the manufacturing process is simulated theoretically (for instance by carrying out a numerical analysis, such as a finite element analysis) partially or entirely to obtain a simulation result indicating an output of the manufacturing process to be expected. Said output may in particular be the manufactured component carriers with properties which can be expected when carrying out the manufacturing process using the above-mentioned input parameters. Subsequently, the simulation result may be evaluated theoretically. During this evaluation, it may be checked whether or not the manufacturing process (or part thereof) and/or the component carriers to be manufactured (or part thereof) fulfil one or more quality criteria. For instance, such a quality criterion may be whether or not plated copper in drill holes of the component carriers to be manufactured has a sufficient amount and/or thickness and/or quality. In one example, a sufficient amount of plated copper may be assumed if the copper mass, as obtained from a simulation, is within a predefined target range (which may be defined for example by a specification). In another example, a sufficient amount of plated copper in a through hole may be assumed if said through hole is filled with copper at least to a predefined minimum degree (in an embodiment in which the through hole is only partially filled with copper, as a result of the simulation). In yet another example, a quality criterion to be fulfilled may be whether or not the entire volume of a drill hole is plated continuously with copper. If not, the component carrier or a corresponding subregion thereof may be classified as critical. Highly advantageously, such critical regions of a component carrier resulting from the execution of a manufacturing process with a certain set of input parameters may be identified prior to the actual execution of a real manufacturing process. Potential defects may therefore be identified virtually, i.e. before they occur physically. In an iterative process, a value of one, some or all of the input parameters may be changed, and the sequence of simulation and evaluation may be repeated to determine whether compliance with the at least one quality criterion can be achieved or non-compliance becomes at least smaller. By a corresponding modification of the input parameters or parts thereof, it may then become possible to achieve compliance with the at least one quality criterion or to at least increase the quality of the component carriers to be manufactured based on the modified input parameters when applied to the manufacturing process. For example, an exemplary embodiment of the invention may be embodied as a software simulating a plating process and subsequently evaluating a result of the simulation.

More specifically, an exemplary embodiment of the invention provides an assessing process for observing copper distribution beforehand PCB production. This may allow a preliminary identification of critical drill grid configurations (for instance in terms of pitch, a via diameter, a number of vias, etc.). Advantageously, a simulation and evaluation on this basis may allow to derive results which can be displayed to a user as a visualization of the copper distribution over a whole panel. Hence, a product-related prediction of the copper distribution may be made. This may lead to a yield improvement, for instance in view of an obtainable scrap reduction and optimized panel format utilization. Furthermore, exemplary embodiments of the invention may enable to carry out a previous design check before actually executing a manufacturing process, thereby avoiding unnecessary waste. The described method of assessing a component carrier manufacturing process may further allow to identify or define critical areas of the component carrier or even panel to be processed during component carrier manufacture. Advantageously, a design of component carriers to be manufactured can be adapted in accordance with a result of the prediction of the component carrier properties. For example, variations in the plating chemistry can be simulated, and used plating chemistry can be displayed in the simulation.

Advantageously, a method according to exemplary embodiments of the invention may even combine information concerning a plating process with information obtained with regard to other processes (such as processes for hotspot identification for cross sections).

Advantageously, the process may be executed with a short simulation time, since a numerical analysis of the simulation of the manufacturing process may involve only a limited computational burden. Moreover, a software-based embodiment can be integrated in a manufacturing environment. Results of the manufacturing process can be used to design the processing of new part-numbers in a CAM (computer aided manufacturing) environment. Another advantage of exemplary embodiments of the invention is that they can be easily implemented in different kinds of manufacturing plants, and may even support a digitalized production. In addition, exemplary embodiments of the invention may reduce the manufacturing effort for manufacturing component carriers, since unnecessary material costs (due to scrap, wrong panel utilization, etc.) may be avoided, which may lead to a yield improvement. By checking process ability of a manufacturing process using a set of input parameters, scrap may be reduced (in particular scrap which may occur during a plating process). More specifically, due to the possibility to check the process ability beforehand, scrap during actual execution of the manufacturing process can be reduced. For example, bottle necks of a plating process can be detected prior to the production. Furthermore, exemplary embodiments may help with panel utilization with critical drill numbers. Beyond this, exemplary embodiments of the invention may be used as a support for a PCB developer during planning a product. In particular, exemplary embodiments of the invention may help to identify critical areas with high amount of laser vias in a small area. Preferably, a two-dimensional visualization of copper distribution on a panel or a component carrier (more preferably both on a front side and a back side) may be presented to a user. Additionally or alternatively, a set of copper thickness values over a whole panel or at least over a whole component carrier may be determined, and preferably visualized. Moreover, a yield improvement may be achieved due to a preliminary identification of critical and/or uneven areas.

In order to keep simulation times short, it may be possible to simulate only critical layers (which may take for example 1 to 4 minutes per layer). By limiting the simulation and evaluation to a subset of layers of a component carrier to be manufactured only, processing resources may be used efficiently and assessment of the manufacturing process may be made quickly. The selection of one or more layers used exclusively for simulation and evaluation may be based on at least one criterion, for example at least one criterion related to whether or not a certain layer is subjected to plating.

Hence, exemplary embodiments may allow to make an early decision if component carriers can be produced using the predefined manufacturing process in combination with the provided set of input parameters. If not, a change of parameterization may be made. Moreover, it may be possible to combine information concerning a plating process, as obtained by a method according to an exemplary embodiment of the invention, with information derived from other processes. Such an approach may allow to provide crucial information for a designer to include this for instance for controlled impedance, to identify potential hotspots, etc.

According to an exemplary embodiment of the invention, a tool for assessing copper quality of a PCB during preparation of a PCB manufacture may be provided. Such a tool may be configured to calculate the copper deposition depending on the amount of laser vias and/or plated through holes. For example, such a tool can be used to detect at which position(s) or in which region(s) failure during a copper plating process may likely happen. Preferably, such a tool can additionally use a CAM-program environment together with product engineering information. When using such a tool, it may be possible to check if a PCB can be produced without problems during copper plating or if there are hotspots where problems can occur. It may also be determined if there are major problems where the design has to be checked again.

For example, an output of the method or the tool may be a classification indicating whether (a) component carriers can be manufactured using the manufacturing process and the set of input parameters without issues, (b) component carriers can be manufactured using the manufacturing process and the set of input parameters with minor issues or with issues which can be overcome, and (c) component carriers can be manufactured using the manufacturing process only after modification of the set of input parameters. For instance, a corresponding conclusion can be output to a user in a traffic light code (for instance indicating scenario (a) as green, scenario (b) as yellow, and scenario (c) as red).

According to exemplary embodiments of the invention, the above-mentioned tool can be equipped with a self-learning algorithm (for instance implemented in an artificial intelligence module) that can suggest adjustment depending on already produced PCBs and/or designs.

Another advantage of exemplary embodiments is that the tool or method may be configured to be combined with other processes, which follow the copper plating process to create individual processing parameters.

According to exemplary embodiments of the invention, the tool or method may be used for automotive applications. Advantageously, potential issues with PCB manufacture (preferably in terms of copper plating) may be detected at an early stage, i.e. before the component carriers are physically produced. This may lead to less scrap during production due to the execution of the simulation and evaluation during preparation rather than during PCB manufacture. For example, each copper line can be analyzed (for instance in terms of used chemistry), and the results of the analysis may be displayed. Advantageously, short simulation times may be achieved when only critical layers are simulated.

With a simulation of copper deposition properties before physical production of component carriers, it may be possible to reuse scrap introduction which may help to reduce the ecological footprint and to reduce resources. By such an application, it may be possible to support PCB designers during the creating process of the PCB.

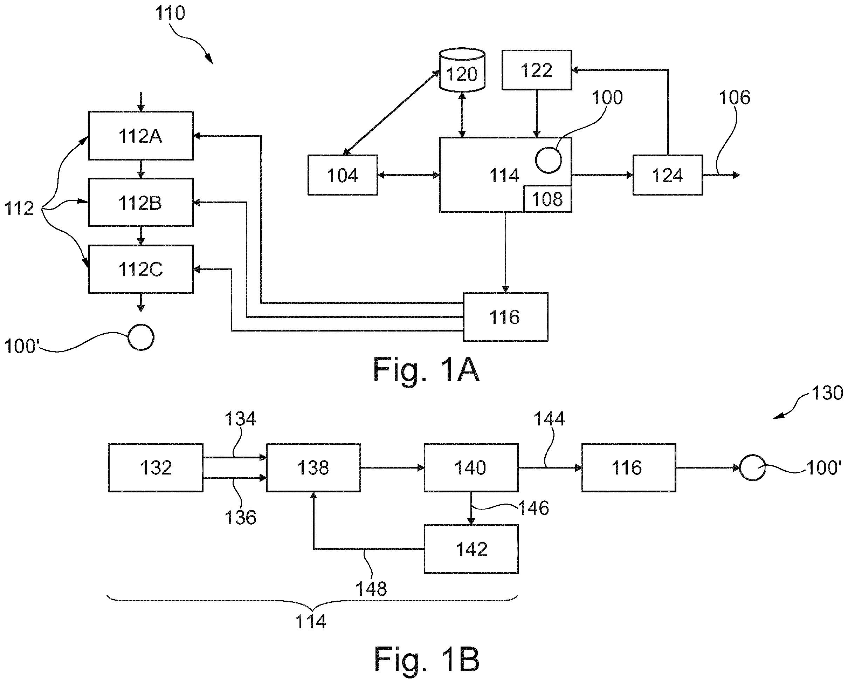

**Figure 1A** illustrates schematically a manufacturing plant 110 comprising a system for assessing a manufacturing process of manufacturing component carriers according to an exemplary embodiment of the invention. During the assessment, the assessed component carriers 100 are virtual, whereas physical component carriers 100' may be produced with the assessed manufacturing method when approved.

The illustrated manufacturing plant 110 for manufacturing PCB-type component carriers 100' comprises a plurality of manufacturing modules 112 each configured for executing a respective section of a manufacturing process of manufacturing the component carriers 100'. For example, the illustrated manufacturing modules 112 comprise a drilling module 112A for drilling drill holes in a pre-form of a component carrier 100', a plating module 112B for plating metal in and/or on a preform of a component carrier 100', and a patterning module 112C for patterning a metal layer on a preform of a component carrier 100'. In drilling module 112A, drill holes are formed in a laminated layer stack used for producing the component carriers 100'. Said drill holes may be formed for instance by laser drilling or mechanically drilling in accordance with a predefined drill scheme. In plating module 112B, the drilled holes are filled with a metal such as copper and corresponding surface portions of the layer stack may be covered with the metal. Plating in plating module 112B may be carried out by electroless plating and/or galvanic plating. In patterning module 112C, a metallic layer on the surface of the layer stack may be patterned, for instance by a lithography and an etching process.

However, it should be said that the mentioned processes are only exemplary. For instance, exemplary embodiments may not only be used for subtractive processes, but may also be used for additive processing (in particular modified semi additive processing, mSAP). Different component carrier manufacturing processes may be considered, such as pattern plating, mSAP, panel plating, etc. All processes can be vertical or horizontal.

A person skilled in the art of printed circuit board manufacturing technology will understand that the described manufacturing stages are merely examples, and that another and/or further manufacturing stages may be carried out for manufacturing PCB-type component carriers 100.

Prior to actually manufacturing the physical component carriers 100, an assessment device 114 may be operated for theoretically assessing the manufacturing process partially or entirely by carrying out a method as described below referring to Figure 1B. In particular, assessment device 114 may simulate and evaluate the plating process to be executed in plating module 112B based on a set of input parameters. Taking this measure, potentially critical regions of the component carriers 100 to be manufactured may be identified, and if necessary an envisaged manufacturing process may be modified to get rid of such critical regions. For the mentioned simulation and evaluation, assessment device 114 may use at least one processor 108. For example, processor 108 may be a microprocessor or a central processing unit (CPU). Processor 108 may be embodied as one or more processor units or as part of such a processor unit. As a basis for the simulation and evaluation, the assessment device 114 may also use processing results of an artificial intelligence module 104, which may include a neural network which has been properly trained with learning data. For the assessment, the assessment device 114 may also access a database 120, which may be embodied as a mass storage device such as a hard disk. In database 120, historic data sets, CAM data, sets of operation parameters for carrying out manufacturing processes, etc., may be stored. Such data may be used for the assessment device 114 for executing the assessment and/or by artificial intelligence module 104 for learning purposes. Thus, the simulation and/or the evaluating executed by assessment device 114 may make use of an artificial intelligence module 104. Preferably, a result of the simulation, a result of the evaluating, historic experimental data, and/or historic simulation results may be taken into account for training the artificial intelligence module 104.

Furthermore, Figure 1A illustrates an input/output (I/O) unit 122, by which a user can input user-defined input parameters for consideration during the assessment by the assessment device 114. Input/output unit 122 may for example comprise a keypad or a touchscreen. A visual output 106 of the assessment may be displayed to a user by a display unit 124, such as a monitor or an LCD display.

As shown as well in Figure 1A, a manufacturing control device 116 may be configured for controlling the manufacturing modules 112 for manufacturing the component carriers 100' based on a result of the simulation and/or of the evaluating. For this purpose, manufacturing control device 116 may be communicatively coupled with assessment device 114. For instance, only after approval of a manufacturing method and corresponding input parameters by assessment device 114, manufacturing control device 116 may control the manufacturing modules 112 for physically producing component carriers 100' based on the manufacturing process assessed in terms of a set of input parameters.

An exemplary embodiment of a method executed by assessment device 114 will be explained in the following referring to Figure 1B:

**Figure 1B** illustrates a flowchart 130 of a method for assessing a manufacturing process of manufacturing real component carriers 100' in a manufacturing plant 110 of Figure 1A according to an exemplary embodiment of the invention. During the assessment, virtual component carriers 100 may be simulated and evaluated. The assessment may be carried out by assessment device 114, for instance the one shown in Figure 1A, which may supply an assessment result to manufacturing control device 116 for manufacturing printed circuit board-type component carriers 100'.

Now referring in more detail to assessment device 114 according to Figure 1B, it may be supplied with a set of input parameters 132. The input parameters 132 may comprise product parameters 134 characterizing the components 100 to be manufactured and may comprise process parameters 136 characterizing the manufacturing method used for the manufacture of the component carriers 100. Based on these input parameters 132, a theoretical simulation of execution of the manufacturing method using these input parameters 132 may be carried out in a simulation unit 138. The results of the simulation may be forwarded from the simulation unit 138 to an evaluation unit 140. Evaluation unit 140 may evaluate whether properties of virtual component carriers 100 which can be expected to be obtained when simulating execution of the manufacturing method using the input parameters 132 comply with quality criteria which shall be complied with according to a specification. If this is the case (as indicated by reference sign 144), manufacturing control device 116 may be controlled by evaluation unit 140 to execute physical production of the component carriers 100' by carrying out the manufacturing method on the manufacturing modules 112 using the set of input parameters 132. If this is not the case (as indicated by reference sign 146), a modification unit 142 modifies the input parameters 132 and initiates a new iteration (see reference sign 148) of simulation by simulation unit 138 and evaluation by evaluation unit 140 whether the at least one quality criterion is now fulfilled when using the modified input parameters 132. This procedure may be repeated until compliance is achieved and the manufacturing process can be initiated accordingly, or the procedure is terminated without success.

After this overview, the described method will be explained in more detail:
The manufacturing plant 110 of Figure 1A and Figure 1B functions for assessing a manufacturing process of manufacturing component carriers 100. The method executed by the manufacturing plant 110 comprises providing a set of input parameters 132 which will be later used as a basis for simulating properties of component carriers 100 obtainable by execution of the manufacturing method. The input parameters 132 may be composed of product parameters 134 describing a design of the component carriers 100 to be manufactured (for instance defining a drill pattern of the component carriers 100 to be manufactured) and process parameters 136 describing the corresponding manufacturing process (for instance describing the process of laser drilling and the subsequent process of galvanic plating). Preferably, the input parameters 132 comprise a drill file indicative of an arrangement of drill holes to be drilled and to be filled with metal. Moreover, the input parameters 132 may include information concerning a panel to be used for manufacturing the component carriers 100.

Based on said input parameters 132, a simulation of an execution of the manufacturing process using said input parameters 132 is conducted by simulation unit 138, for instance based on a finite element method (FEM) analysis. Thereafter, evaluation unit 140 evaluates whether the simulation result indicates compliance of the manufacturing process and the component carriers 100 to be manufactured with one or more predefined quality criteria. For instance, such a quality criterion may be whether an amount and/or a thickness of plated metal in a set of drill holes of component carriers 100 exceeds a predefined threshold value.

If such a quality criterion is failed selectively in a certain portion of a virtual component carrier 100 as obtained by virtually executing the manufacturing method using the input parameters 132, one or more corresponding critical regions of a component carrier 100 to be manufactured by the manufacturing process may be identified based on a result of the evaluating.

In order to improve a degree of compliance of the component carrier 100 to be manufactured (for example in a previously identified critical region), one, some or all of said input parameters 132 may be changed. Thereafter, the simulation by simulation unit 138 and the evaluation by evaluating unit 140 may be repeated with the changed set of input parameters 132 for enhancing compliance with the one or more predefined quality criteria. Simulation and evaluation may be repeated a plurality of times in an iterative way, for instance until at least a predefined degree or degree of compliance is achieved.

Via input/output unit 122 shown in Figure 1, it is also possible to receive and consider a user input for carrying out the simulation by simulation unit 138. For instance, a user may define via input/output unit 122 product parameters 134 and/or process parameters 136 which shall remain fixed during the above described iterations, for instance because a user may consider a corresponding parameter value mandatory. Additionally or alternatively, it is also possible that the user input includes a user-defined modification of at least one of the input parameters 132.

For instance, a process of depositing metal to the component carriers 100 by galvanic plating may be simulated by simulation unit 138. In particular, a distribution of galvanically plated metal in an interior and/or on main surfaces of the component carriers 100 may be simulated by simulation unit 138. Evaluation unit 140 may then evaluate an expected spatial distribution of the galvanically plated metal over the component carrier 100 to be manufactured. Preferably, the evaluation unit 140 may evaluate a deviation between the expected spatial distribution and a predefined target distribution of the galvanically plated metal over the component carrier 100 to be manufactured. Evaluation unit 140 may further determine one or more critical regions of the component carrier 100 to be manufactured in which the galvanically plated metal, as obtained from the simulation by simulation unit 138, has a critical value, for instance a thickness below a predefined threshold value.

Again referring to Figure 1A, it may be possible to create a visual output 106 displaying, partially or entirely, the component carrier 100 to be manufactured as obtained by the simulation by simulation unit 138 and/or by the evaluating by evaluation unit 140.

If the result of the evaluation indicates that the theoretically simulated and evaluated manufacturing process using the input parameters 132 is approved, the component carriers 100 may be manufactured by manufacturing modules 112 based on a result of the simulation and/or of the evaluating.

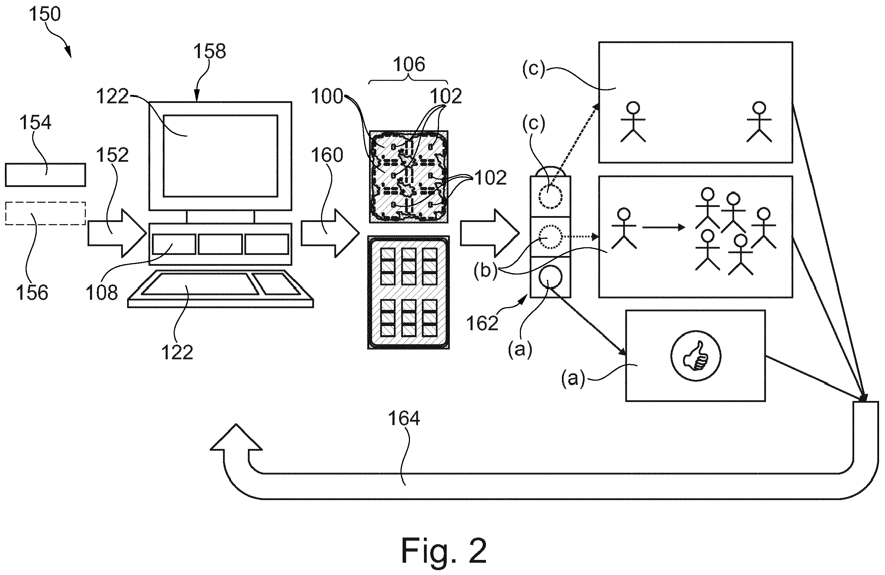

**Figure 2** illustrates a system 150 for executing a method of assessing a manufacturing process of manufacturing component carriers 100 according to an exemplary embodiment of the invention. Descriptively speaking, Figure 2 shows integration of a component carrier manufacturing analyzer tool in a CAM (computer aided manufacturing) environment.

As an input 152 to the system 150, CAM data 154 (descriptively speaking including a recipe for component carrier manufacture) as well as a drill file and panel information, indicated by reference sign 156, are provided. Additionally or alternatively to the CAM data according to a reference sign 154, product engineering data may be input as part of the input parameters 132. The drill file may include information at which positions of a panel (as a preform for component carriers 100 to be manufactured) drill holes are to be formed (by laser drilling and/or mechanically drilling). Panel information may be indicative of the numbers of arrays and/or component carriers 100 to be created on the panel, and corresponding sizes. In Figure 1A and Figure 1B, such information has been denoted as input parameters 132 (including product parameters 134 and process parameters 136).

A computer 158 including one or more processors 108 and an input/output device 122 may provide the functionality of simulation unit 138 and evaluation unit 140, as described above. More specifically, computer 158 includes software which simulates the plating process of component carriers 100 to be manufactured on panel level and calculates the metal (preferably copper, whereas other metals, such as gold or tin, may be used as well) amount and metal distribution resulting from the plating process.

However, one or more other parameters may be calculated by computer 158 additionally or alternatively. Such other parameters may include for example metal thickness, metal roughness, etc. A person skilled in the art will understand that other metals than copper may be used as well, and also other plating processes may be executed.

An output 160 of this assessment of the drilling and plating part of the component carrier manufacturing process is indicated in Figure 2 as visual output 106 (to be displayed by input/output unit 122). Figure 2 shows two corresponding examples of visual output 106 on panel level. By means of a color code of visual output 106, one or more critical regions 102 on the virtual component carriers 100 to be manufactured may be indicated to show portions of the panel in which copper distribution is considered critical (in particular critically low and/or critically high). Descriptively speaking, drilled and plated regions with higher and lower copper content of the panel to be processed for manufacturing component carriers 100 are indicated visually in visual output 106.

Processor 108 may then interpret information corresponding to visual output 106, i.e. information of said simulation and evaluation. For instance on the basis of a threshold analysis, processor 108 may judge whether potentially identified critical regions 102 are (a) still acceptable (for instance are still in compliance with a predefined specification), (b) require detailed analysis, or (c) lead to the necessity of a rejection or redesign (in particular a change or adaptation of input parameters 132) of the component carrier manufacturing process. The presence of a respective one of the mentioned three scenarios (a), (b), (c) may be indicated in a visually intuitive way to a user for instance in the form of a traffic light 162. However, key performance indicators may also be output in another form than using a traffic light code.

As desired or required, a reiteration 164 of the processes of providing or defining input parameters 132 (for example changing input parameters 132 for a next iteration), of simulation and evaluation may be initiated any desired number of times for improving compliance of the planned PCB manufacturing process with quality criteria (for example defined by a specification for manufacturing component carriers).

Hence, system 150 according to Figure 2 may allow to provide a process for observing a copper distribution beforehand PCB production and may therefore provide a component carrier manufacturing design check.

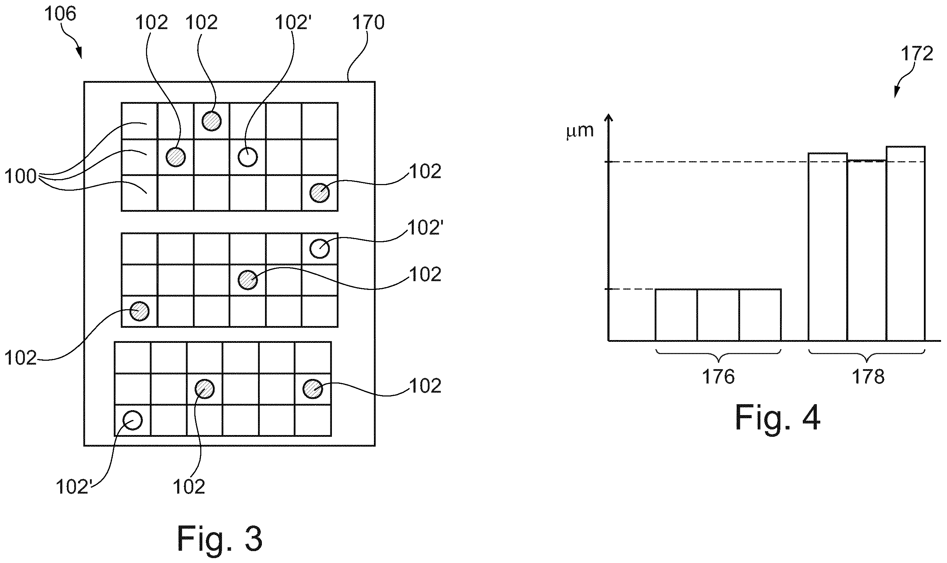

**Figure 3** shows a visual output 106 of a virtual panel 170 with virtual component carriers 100 as obtained from a simulation by a method according to an exemplary embodiment of the invention. Visual output 106 indicates, by a color code or the like, several critical regions 102 in which the simulation leads to the result that the copper content or thickness after plating drill holes is too small (or is too high, see reference sign 102'). The simulation results according to Figure 3 relates to horizontal copper plating. As shown, an identification of critical areas or regions 102 is easily possible by visual inspection or automatically by a threshold analysis. Generally, a good fit of values can be seen in large portions of outer panel regions. Minimum and maximum values in the displayed grid area are accurate.

**Figure 4** shows a diagram 172 illustrating results of a simulation and evaluation of a method according to an exemplary embodiment of the invention relating to Figure 3. Diagram 172 indicates a simulated copper thickness for three examples and shows a simulation minimum 176 and a simulation maximum 178. The three examples are three values from three different cross-sections of the real board to compare the values.

Starting from simulation results (in the shown embodiment concerning surface copper) obtained from simulation unit 138 as described above, a panel analyzing process executed by evaluation unit 140 may provide detailed information about copper thickness distribution on a panel under analysis and inside drill holes. Advantageously, said tool may automatically identify most critical drill holes in a selected area, i.e. may identify at least one critical region 102.

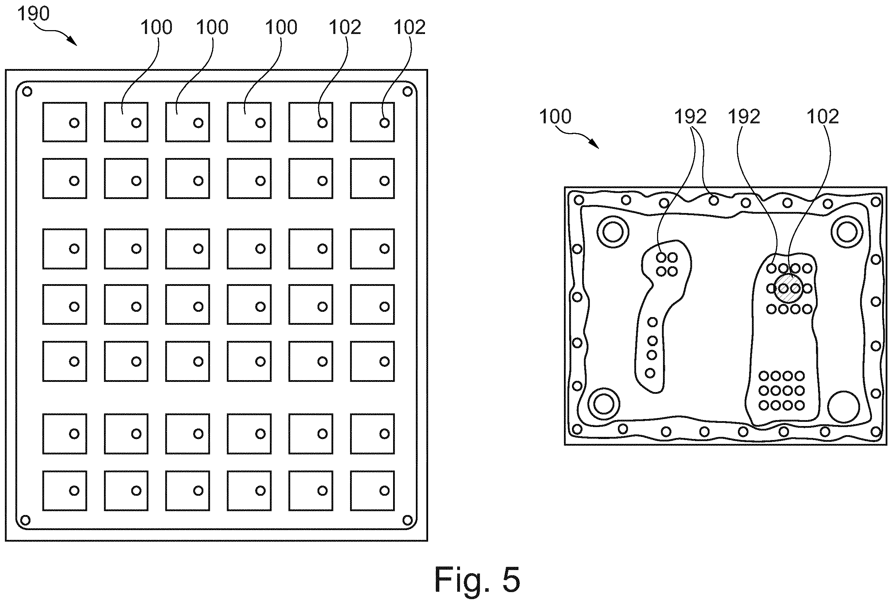

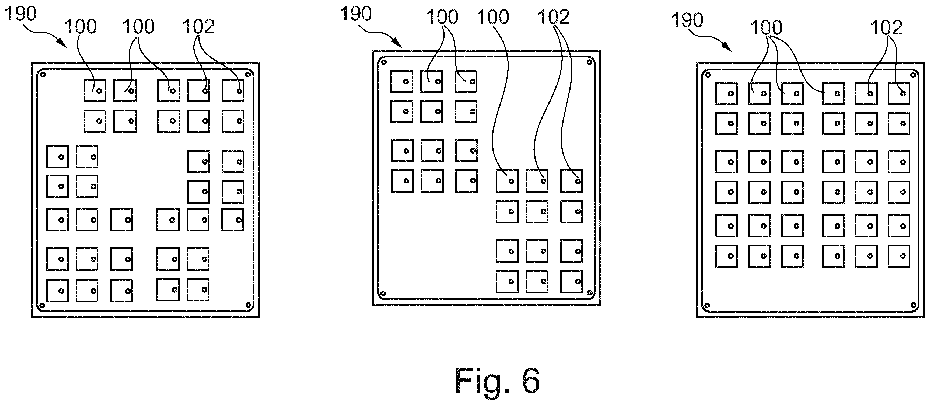

Figure 5 and Figure 6 show arrays 190 of simulated component carriers 100 to be manufactured during a process of assessing and, if appropriate, improving a component carrier design. Figure 5 to Figure 9 show simulated component carriers 100 (of corresponding arrays 190) to be manufactured during a process of assessing and, if appropriate, improving a design for meeting quality criteria according to an exemplary embodiment of the invention. An amount of galvanically plated metal (in particular copper) in drill holes 192 is analyzed and evaluated for checking whether corresponding quality criteria are fulfilled. Such a quality criterion may be that an amount of copper in a respective drill hole 192 exceeds a respective predefined threshold value which, if not reached, may be considered as critical in terms of reliability of the component carriers 100 to be manufactured. The parameter values mentioned in the following are merely exemplary, and other values can be used as well depending on a certain application.

Referring to **Figure 5****,** simulation results of an initial design of component carriers 100 to be manufactured are illustrated for plated through holes 192 having a first diameter, for instance in a range from 1 µm to 2000 µm and preferably in a range from 50 µm to 1500 µm. In the shown embodiment, a board thickness of 3 mm, a current density during electroplating of 12 A/dm², and a target copper plating thickness of 30 µm have been assumed. The mentioned and/or other parameters may be used as input parameters 132 defining a galvanic plating process. The simulation then outputs the maximum and minimum copper thickness which can be reasonably expected when executing the manufacturing method. If desired or required, a self-learning algorithm (for instance executed by an artificial intelligence module 104) may be executed in terms of the simulation and/or the evaluation. For training such an artificial intelligence module 104, experimental data may be used for learning purposes.

A result of a corresponding simulation is a minimum copper thickness compared with a maximum copper thickness. Critical areas or regions 102 with too small copper thickness may be identified which may negatively impact a plated through hole filling when executed in practice.

In view of the critical regions 102 identified with the procedure described referring to Figure 5, a corresponding manufacturing process for manufacturing real component carriers 100' cannot be approved. In contrast to this, different potential solutions may be tested as to whether they are capable to reduce or even minimize the risk of unreliable plated through hole filling in the critical region(s) 102.

In a first solution approach according to Figure 6, different array arrangements are analyzed: This approach leads to a different copper distribution on the panel format corresponding to a changed distribution of the current density during plating.

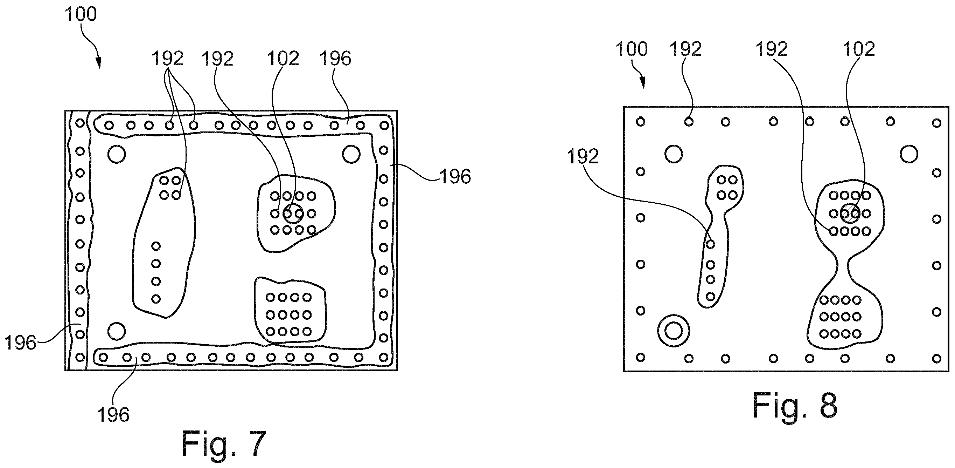

In a second solution approach according to Figure 7, additional drills in an array edge are simulated: however, as for the first solution, instead of changing the array arrangement, a changed distribution of the current density is achieved by providing additional holes to be filled during plating within a design-free area (for example at the panel edge).

In a third solution approach according to Figure 8, a change of the diameter of the plated through holes or drill holes 192 to a smaller value of 50% of the initial value is simulated. It turns out that the critical aspect ratio may be reduced by decreasing the through-hole diameter.

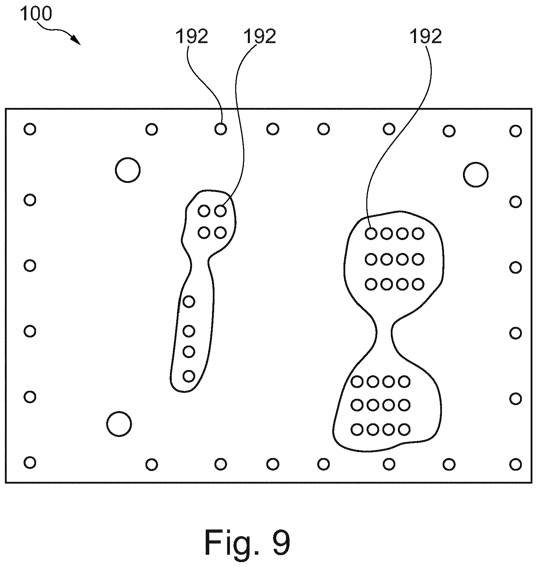

In a fourth solution approach according to Figure 9, a further change of the diameter of the plated through holes to a still smaller value of 30% of the initial value is simulated. Hence, the diameter may be further reduced.

All four solution approaches were simulated, and the results are shown in Figure 6 to Figure 9:
Referring to **Figure 6****,** simulation results for plated through holes with the initial diameter and three different array arrangements are shown. No improvement of the copper distribution is obtained, critical regions 102 remain.

Referring to **Figure 7****,** simulation results for plated through holes having the initial diameter are displayed. Additional drills are created in an array edge 196. A small improvement of the copper distribution can be seen in the simulation results.

Referring to **Figure 8****,** simulation results for plated through holes having a reduced diameter are shown. Some improvement of the copper distribution can be derived from the simulation results, but critical regions 102 are still present.

Referring to **Figure 9****,** simulation results for plated through holes having a further reduced diameter are shown. A significant improvement of the copper distribution can be derived from the simulation results. All quality criteria are now fulfilled and no critical regions 102 remain. Hence, real or physical component carriers 100' can be manufactured based on a correspondingly modified manufacturing method defining the creation of through holes with the further reduced diameter.

It should be noted that the term "comprising" does not exclude other elements or steps and the "a" or "an" does not exclude a plurality. Also elements described in association with different embodiments may be combined.

It should also be noted that reference signs in the claims shall not be construed as limiting the scope of the claims.

Implementation of the invention is not limited to the preferred embodiments shown in the figures and described above. Instead, a multiplicity of variants are possible which use the solutions shown and the principle according to the invention even in the case of fundamentally different embodiments.

## Claims

1. A method of assessing a manufacturing process of manufacturing component carriers (100), wherein the method comprises:
providing a set of input parameters (132) comprising product parameters (134) indicative of a design of the component carriers (100) to be manufactured and process parameters (136) indicative of at least part of the manufacturing process;
carrying out a simulation of at least part of the manufacturing process based on the input parameters (132); and
evaluating whether the simulation result indicates compliance of at least part of the manufacturing process and/or of at least part of the component carriers (100) to be manufactured with at least one predefined quality criterion.

2. The method according to claim 1, wherein the method comprises identifying at least one critical region (102) of a component carrier (100) to be manufactured by the manufacturing process and/or at least one critical part of the manufacturing process based on a result of the evaluating.

3. The method according to claim 1 or 2, wherein the method comprises changing at least one of said input parameters (132) and repeating the simulation with the changed set of input parameters (132) for enhancing compliance with the at least one predefined quality criterion.

4. The method according to any of claims 1 to 3, wherein providing the set of input parameters (132) comprises receiving at least one user input, and taking into account the received at least one user input for carrying out the simulation.

5. The method according to claim 4, wherein the at least one user input includes a modification or a fixing of at least one of the input parameters (132).

6. The method according to any of claims 1 to 5, wherein the method comprises carrying out the simulation and/or the evaluating using an artificial intelligence module (104).

7. The method according to claim 6, wherein the method comprises supplying at least one of the group consisting of a result of the simulation, a result of the evaluating, historic experimental data, historic simulation results, and data relating to the at least one predefined quality criterion for training the artificial intelligence module (104).

8. The method according to any of claims 1 to 7, wherein the method comprises simulating, as the at least part of the manufacturing process, a process of applying metal to the component carriers (100).

9. The method according to claim 8, comprising at least one of the following features:
wherein the method comprises simulating, as the process of applying metal to the component carriers (100), a process of depositing metal, wherein in particular the method comprises simulating, as the process of depositing metal, at least one process of the group consisting of galvanic plating, electroless plating, in particular sputtering or formation of chemical metal, printing, chemical vapour deposition, and physical vapour deposition;
wherein the method comprises evaluating an expected spatial distribution of the applied metal over the component carrier (100) to be manufactured, wherein in particular evaluating whether the simulation result indicates compliance of at least part of the manufacturing process and/or of at least part of the component carriers (100) to be manufactured with at least one predefined quality criterion comprises evaluating a deviation between the expected spatial distribution and a predefined target distribution of the applied metal over the component carrier (100) to be manufactured;
wherein the method comprises determining at least one critical region (102) of the component carrier (100) to be manufactured in which the applied metal, as obtained from the simulation, has a critical value, in particular has a critically small amount and/or a critically small thickness of metal;
wherein the method comprises simulating a distribution of applied metal in an interior and/or on at least one of main surfaces of the component carriers (100).

10. The method according to any of claims 1 to 9, wherein the method comprises creating a visual output (106) displaying at least part of the component carrier (100) to be manufactured as obtained by the simulation and/or by the evaluating.

11. The method according to any of claims 1 to 10, comprising at least one of the following features:
wherein the method comprises manufacturing a physical component carrier (100') based on a result of the simulation and/or of the evaluating;
wherein the input parameters (132) comprise at least one of the group consisting of a drill file (156) indicative of an arrangement of drill holes (192) to be drilled and to be filled with metal, and a panel (170) to be used for manufacturing the component carriers (100);
wherein the product parameters (134) are indicative of a physical shape of the component carriers (100) to be manufactured, in particular in terms of at least one of the group consisting of holes, external recesses, and an outline.

12. A computer-readable medium, in which a computer program of assessing a manufacturing process of manufacturing component carriers (100) is stored, which computer program, when being executed by one or a plurality of processors (108), is adapted to carry out or control a method according to any of claims 1 to 11.

13. A program element of assessing a manufacturing process of manufacturing component carriers (100), which program element, when being executed by one or a plurality of processors (108), is adapted to carry out or control a method according to any of claims 1 to 11.

14. Manufacturing plant (110) for manufacturing component carriers (100'), wherein the manufacturing plant (110) comprises:
a plurality of manufacturing modules (112) each configured for executing at least part of a manufacturing process of manufacturing component carriers (100'); and
an assessment device (114) configured for assessing at least part of the manufacturing process by carrying out a method according to any of claims 1 to 11.

15. The manufacturing plant (110) according to claim 14, comprising a manufacturing control device (116) configured for controlling the manufacturing modules (112) for manufacturing the component carriers (100') based on a result of the simulation and/or of the evaluating.
